# EUROPÄISCHE PATENTSCHRIFT

(11) **EP 1 441 124 B1**
(45) Veröffentlichungstag und Bekanntmachung des Hinweises auf die Patenterteilung: **19.03.2008**
(21) Anmeldenummer: 04000413.7
(22) Anmeldetag: 12.01.2004
(51) Int. Cl.: F02P 23/04

(54) **Verbrennungsmotor**
Internal combustion engine
Moteur à combustion interne

(30) Priorität: 16.01.2003 AT 542003
(43) Veröffentlichungstag der Anmeldung: 28.07.2004
(73) Patentinhaber: GE Jenbacher GmbH & Co. OHG, 6200 Jenbach (AT)
(72) Erfinder: Herdin, Günther, 6200 Jenbach (AT); Klausner, Johann, 6391 St. Jakob i.H. (AT)
(74) Vertreter: Torggler, Paul Norbert

(56) Entgegenhaltungen:
- EP-A- 1 063 427
- EP-A- 1 253 316
- EP-A- 1 329 631
- WO-A-02/095220
- PATENT ABSTRACTS OF JAPAN Bd. 1998, Nr. 12, 31. Oktober 1998 (1998-10-31) & JP 10 196508 A (DAIHATSU MOTOR CO LTD), 31. Juli 1998 (1998-07-31)

## Beschreibung

Die vorliegende Erfindung betrifft einen Verbrennungsmotor mit mindestens einem Zylinder, bei dem ein Kraftstoff-Luft-Gemisch im Zylinder durch einen Kolben verdichtbar ist.

Das ständig wachsende Ausmaß des Einsatzes derartiger Verbrennungsmotoren in Kraftfahrzeugen und zur Erzeugung elektrischer Energie, hat aufgrund der Beschränktheit der fossilen Brennstoffe, welche die Basis für die Herstellung der Motorkraftstoffe bilden und aufgrund neuer staatlicher Gesetzgebungen zur Beschränkung der Emission schädlicher Abgase, die Suche nach neuartigen hocheffizienten und schadstoffarmen Verbrennungskonzepten für derartige Motoren vorangetrieben.

Beispielhaft ist hier das HCCI-Konzept (homogeneous compressed charge ignition) zu nennen, bei dem die Zündung eines extrem mageren und homogenen Kraftstoff-Luft-Gemisches durch die Temperaturerhöhung während des Verdichtungsvorganges nahe dem oberen Totpunkt des Kolbens eingeleitet wird. Beim HCCI-Konzept werden die Merkmale konventioneller Verbrennungskonzepte in höchst vorteilhafter Weise miteinander kombiniert, da beispielsweise in Anlehnung an den Otto-Motor ein homogenes Kraftstoff-Luft-Gemisch eingesetzt wird, was die Partikelentstehung (Ruß) während des Verbrennungsprozesses minimiert und in Anlehnung an den Dieselmotor eine Selbstzündung des Kraftstoff-Luft-Gemisches erfolgt, wodurch sich ein hoher thermodynamischer Wirkungsgrad ergibt. Der Einsatz eines mageren Kraftstoff-Luft-Gemisches erlaubt dessen Verbrennung mit extrem niedrigen Werten von Stickoxiden (NOₓ).

Die Selbstzündung des Kraftstoff-Luft-Gemisches im Brennraum wird meist durch eine Kombination verschiedener Maßnahmen erreicht, wie beispielsweise ein hohes geometrisches Verdichtungsverhältnis ε und das Vorwärmen der Zylinderladung durch geeignete Maßnahmen (Luftvorwärmung oder Abgasrückführung). Da sich bei diesem Verbrennungskonzept das Kraftstoff-Luft-Gemisch mehr oder weniger gleichzeitig im gesamten Zylindervolumen (volumetrisch) entzündet, erfolgt die Verbrennung extrem schnell. Da darüber hinaus, anders als bei Otto-Motoren keine Flammenausbreitung benötigt wird, kann ein derartiger HCCI-Motor mit einem hohen Luft-Kraftstoff-Verhältnis λ betrieben werden.

Problematisch ist bei diesem Stand der Technik, der sich tatsächlich einstellende Zündzeitpunkt, welcher fast exakt mit dem Zeitpunkt in dem der, Kolben seinen oberen Totpunkt erreicht, übereinstimmen muss. Anders als bei Otto- bzw. Diesel-Motoren (Zündung durch Zündkerze bzw. Einspritzen) kann eben dieser Zündzeitpunkt bei einem HCCI-Motor nicht extern gesteuert werden. Dieses Problem verhindert den weiten Einsatz der HCCI-Motorentechnologie, wodurch deren Vorteile ungenützt bleiben.

In der JP 10-196508 A wird gelehrt, die Temperatur des Brennstoff-Luft-Gemisches bis zum Kracken der großen Kraftstoffmoleküle zu erhöhen, was erst unmittelbar vor bzw. beim Start der Verbrennungsreaktion eintritt. Entsprechend verbleibt bei der Lehre gemäß der JP 10-196-508 A auch kein zeitlicher Spielraum mehr bei der Einbringung von Laserlicht in den Brennraum. Dies muss unmittelbar nach dem Totpunkt der Kompression geschehen, da die Verbrennung dort aufgrund der Radikale praktisch bereits beginnt.

Aufgabe der Erfindung ist es einen gattungsgemäßen Verbrennungsmotor zu schaffen, der einen schadstoffarmen Betrieb und eine zeitliche Feinsteuerung des Zündzeitpunktes erlaubt.

Dies wird erfindungsgemäß dadurch erreicht, dass die Temperatur des Kraftstoff-Luft-Gemisches im Brennraum wenigstens auf über etwa 80% und bis auf höchstens etwa 98% der Selbstentzündungstemperatur des Kraftstoff-Luft-Gemisches bringbar ist und die Zündung der Verbrennung zeitlich gesteuert durch die Einbringung von Laserlicht in den Brennraum erfolgt. Die Einstellung des Abstandes der Temperatur des Kraftstoff-Luft-Gemisches von der Selbstentzündungstemperatur, kann beispielsweise (in Abhängigkeit vom Luft-Kraftstoff-Verhältnis λ und dem gewählten Kraftstoff) durch die Wahl des geometrischen Verdichtungsverhältnisses ε, bekannten Maßnahmen zur Vorwärmung des Kraftstoff-Luft-Gemisches und ähnlichen, dem Fachmann geläufigen Maßnahmen erfolgen.

Technisch vorteilhaft ist daran, dass durch den vergleichsweise geringen Abstand von der Selbstentzündungstemperatur einerseits zwar nur noch wenig Laserlichtenergie zur Auslösung der Zündung eingebracht werden muss, andererseits das Gemisch aber noch nicht so weit erhitzt ist, dass eine Entzündung bereits beginnt. Der Zündzeitpunkt ist dadurch mittels des Laserlichts zeitlich steuerbar und damit relativ frei vorgebbar.

Bei einem zeitlich extern gezündeten Verbrennungsmotor, ähnlich wie beim HCCI-Konzept, entsteht durch die punktuell eingebrachte Laserlicht-Energie eine Schockfront, welche die quasi-volumetrische Verbrennung (im Sinne einer quasi-instantanen Verbrennung im gesamten Brennkammervolumen) auslöst. Vorteilhaft ist weiters, dass die Verbrennungsgeschwindigkeit durch die Wahl der Verbrennungsparameter (Abstand zur Selbstentzündungsgrenze, Luftüberschuss, Temperaturniveau, usw.) direkt beeinflusst werden kann. Eine nachteilige, zu schnelle Verbrennung kann so verhindert werden und der Verbrennungsvorgang erfolgt immer in kontrollierter Weise.

Die für die Zündung benötigte Laserenergie kann durch Reduktion des Abstandes zur Selbstentzündungstemperatur verringert werden. Bei einer vorteilhaften Ausführungsform der Erfindung ist beispielsweise vorgesehen, dass die Temperatur des Kraftstoff-Luft-Gemisches im Brennraum wenigstens auf über etwa 85% der Selbstentzündungstemperatur des Kraftstoff-Luft-Gemisches bringbar ist. Es kann weiters vorgesehen sein, dass die Temperatur des Kraftstoff-Luft-Gemisches im Brennraum bis auf höchstens etwa 98% der Selbstentzündungstemperatur des Kraftstoff-Luft-Gemisches bringbar ist.

Bei einer weiteren vorteilhaften Ausführungsform der Erfindung ist vorgesehen, dass das Luft-Kraftstoff-Verhältnis λ größer als 1,5 - vorzugsweise größer als 1,8 - ist. Durch die Verwendung eines derartigen extrem mageren Kraftstoff-Luft-Gemisches, kann die Schadstoffemission (vor allem von Stickoxiden NOₓ) noch weiter reduziert werden. Weiters kann vorgesehen sein, dass das Kraftstoff-Luft-Gemisch im Brennraum wenigstens bereichsweise homogen ist. Dies bedeutet beispielsweise, dass das Luft-Kraftstoff-Verhältnis λ im gesamten Brennraum annähernd konstant ist. Oder, dass das Luft-Kraftstoff-Verhältnis λ in einem Bereich um den Zündort herum kleiner ist als im restlichen Brennraum, das Gemisch um den Zündort herum also fetter ist.

Die Bildung des - vorzugsweise homogenen - Kraftstoff-Luft-Gemisches kann bei einer weiteren vorteilhaften Ausführungsform der Erfindung außerhalb des Brennraumes, beispielsweise in einer Vorkammer erfolgen, oder bei einer weiteren vorteilhaften Ausführungsform der Erfindung im Brennraum, vorzugsweise während des Ansaugtaktes, stattfinden.

Ein besonders hoher thermodynamischer Wirkungsgrad ergibt sich, wenn das geometrische Verdichtungsverhältnis ε größer als 14 - vorzugsweise größer als 16 - ist.

In einer weiteren vorteilhaften Ausführungsform der Erfindung ist vorgesehen, dass der Verbrennungsmotor wenigstens eine Laserlichtquelle, wenigstens eine optische Übertragungseinrichtung und wenigstens eine Einkopplungsoptik zum Fokussieren des Laserlichtes in den Brennraum, auf wenigstens einen Fokus, aufweist. Durch die Verwendung einer einzigen Laserlichtquelle für den gesamten Verbrennungsmotor und der optischen Übertragung des Laserlichtes zu den einzelnen Zylindern, kann die Laserlichtquelle an einer geeigneten Position im Verbrennungsmotor, gegen Erschütterung und Schmutz geschützt, positioniert werden. Durch die Verwendung von holographischenoptischen Elementen zum Fokussieren des Laserlichtes im Brennraum, kann auch bei einem einzelnen Laserlichtstrahl eine Vielzahl von Brennpunkten im Brennraum erzeugt werden.

Bei einer weiteren vorteilhaften Ausführungsform der Erfindung ist vorgesehen, dass jeder Zylinder einen vorkammerlosen Hauptbrennraum mit Ein- und Auslassventilen aufweist und mindestens ein Fokus des Laserlichtes im Hauptbrennraum liegt.

Bei einer weiteren vorteilhaften Ausführungsform der Erfindung ist vorgesehen, dass die Laserlichtquelle einen vorzugsweise diodenlasergepumpten Festkörperlaser aufweist, wobei als Festkörperlaser bevorzugt ein Yb-Laser und/oder Nd-Laser - vorzugsweise Nd-Laser mit G⁴⁺ sättigbarem Absorber - und/oder ein Nd/YAG-Laser ist. Der Einsatz dieser relativ kostengünstigen Laser wird dadurch ermöglicht, dass die Zündenergie des bereits nahe an die Selbstentzündungsgrenze herangeführten Kraftstoff-Luft-Gemisches bei nur etwa 1 bis 30 mJ liegt. Dadurch ist es bei einer weiteren vorteilhaften Ausführungsform der Erfindung sogar direkt möglich Laserdioden als Laserlichtquellen für den Zündlaserpuls zu verwenden.

Die Erzeugung ultra-kurzer Laserpulse mit einer hohen Energiedichte wird bei einer weiteren vorteilhaften Ausführungsform der Erfindung durch den Einsatz eines aktiv oder passiv gütegeschaltenen Lasers erreicht.

Bei einer weiteren vorteilhaften Ausführungsform der Erfindung ist vorgesehen, dass die Pulsdauer eines Laserlichtpulses zwischen 1 ns und 100 ns, vorzugsweise zwischen 5 ns und 50 ns liegt. Weiters kann bei einer vorteilhaften Ausführungsform der Erfindung vorgesehen sein, dass die Wellenlänge des Laserlichtes über 400 nm, vorzugsweise über 1000 nm, liegt. Bei einer weiteren vorteilhaften Ausführungsform der Erfindung ist vorgesehen, dass die Einkopplungsoptik ein - vorzugsweise aus Saphir bestehendes - Brennraumfenster und außerhalb des Brennraumes eine Linse oder eine Linsenanordnung zum Fokussieren von Laserlicht durch das Brennraumfenster hindurch in den Brennraum aufweist. Zur Verringerung der Anzahl der optischen Bauteile kann bei einer weiteren vorteilhaften Ausführungsform der Erfindung vorgesehen sein, dass das Brennraumfenster der Einkopplungsoptik selbst als Linse ausgebildet ist.

Bei einer weiteren vorteilhaften Ausführungsform der Erfindung ist vorgesehen, dass eine elektronische Motorsteuerung bzw. Motorregelung vorgesehen, die in Abhängigkeit von erfassten Motorparametern - vorzugsweise dem Kurbelwellenwinkel (α) und/oder der Drehzahl (n) und/oder der Motorleistung (N) und/oder dem aktuellen Zylinderdruck (P_{z}) im Brennraum - die Laserlichtquelle(n) ansteuert und dabei Laserlichtparameter wie die zeitliche Abfolge und/oder die Pulsdauer und/oder die Zündenergie festlegt. Dies ermöglicht eine optimale Regelung bzw. Steuerung des Verbrennungsmotors im Betrieb.

Es kann auch vorgesehen sein pro Arbeitstakt zwei oder mehrere Zündimpulse zur Zündung des Kraftstoff-Luft-Gemisches einzusetzen, wobei vorteilhafter Weise eine elektronische Motorsteuerung bzw. Motorregelung vorgesehen ist, die die Zündenergie eines zweiten und/oder allfälliger weiterer Laserlichtpulse während desselben Arbeitstaktes eines Zylinders in Abhängigkeit vom aktuellen Zylinderdruck nach dem ersten Laserlichtpuls steuert bzw. regelt. Anhand des Zylinderdruckverlaufes kann auf einfache Weise festgestellt werden, ob bereits der erste Laserpuls zur Zündung geführt hat. War dies der Fall, kann der zweite und allfällige weitere Laserpulse auf einem niedrigeren Standardniveau bleiben, während bei einer nicht erfolgten Zündung durch den ersten Laserpuls und einem daraus resultierenden geringeren Zylinderdruckanstieg der zweite Laserpuls in seiner Intensität und gegebenenfalls in seiner Dauer erhöht werden kann, um eine sichere Zündung bei diesem Arbeitstakt zu erzielen.

Durch das mögliche Betreiben des erfindungsgemäßen Verbrennungsmotors nahe der Selbstentzündungsgrenze des homogenen Kraftstoff-Luft-Gemisches ist die Verwendung jedes beliebigen Kraftstoffes möglich (Vielstoff-Motor). Es kann beispielsweise vorgesehen sein beim Starvorgang anfänglich mit den höchsten zur Verfügung stehenden Zündenergien den Zündvorgang einzuleiten, um eine sichere Entzündung zu bekommen. Es wird dabei vorteilhafterweise mit einem mageren Kraftstoff-Luft-Gemisch begonnen und bei nicht erfolgter Zündung das Gasgemisch des nächsten zu beeinflussenden Zylinders angefettet, bis der Motor den Start erfolgreich abgeschlossen hat. Beim weiteren Hochlauf des Motors kann dann das Luft-Kraftstoff-Verhältnis λ vergrößert und die Zündenergie schrittweise zurückgenommen werden. Da die Selbstentzündungsgrenze des verwendeten Kraftstoff-Luft-Gemisches in bekannter Weise von dessen Temperatur und dem Mischungsverhältnis λ abhängt, kann durch Variation dieser Größen in Abhängigkeit vom verwendeten Kraftstoff die Einleitung des Zündvorganges in einem weiten Zündfenster erfolgen.

Verbrennungsrückstände, welche sich am Brennraumfenster abgesetzt haben, können durch einen hochenergetischen Laserlichtpuls verdampft werden. Dies muss natürlich bei nicht mit Kraftstoff-Luft-Gemisch gefülltem (leerem) Brennraum geschehen. Dieser Reinigungsvorgang kann bei jedem Arbeitstakt, aber auch jeweils nach einer vorgegebenen Anzahl von Arbeitstakten oder bei jedem Startvorgang des Verbrennungsmotors erfolgen.

Zur Durchführung dieses Verfahrens kann vorteilhafter Weise vorgesehen sein, dass eine elektronische Motorsteuerung bzw. Motorregelung vorgesehen ist, die das Luft-Kraftstoff-Verhältnis λ bei Beginn eines Arbeitstaktes in Abhängigkeit von erfassten Motorparametern - vorzugsweise vom Zylinderdruck - der vorhergehenden oder des unmittelbar vorherigen Arbeitstaktes festlegt.

Bei einer weiteren vorteilhaften Ausführungsform der Erfindung ist vorgesehen, dass das geometrische Verdichtungsverhältnis ε - vorzugsweise durch einen Ausweichkolben, vorzugsweise mit hydraulischer Regelung - variierbar ist.

Beim Einsatz eines derartigen Ausweichkolbens, der hydraulisch geregelt sein kann, wird zweckmäßigerweise ein Zusatzvolumen im Zentrum des Zylinderkopfes verändert, um das Verdichtungsverhältnis ε zu variieren. Alternativ oder ergänzend kann diese Variation auch durch ein Verschwenken der Kurbelwelle oder durch eine variable, vorzugsweise druckabhängige Veränderung des Abstandes von der Mitte des Kolbenbolzens zur Oberkante des Kolbens vorgenommen werden.

Der erfindungsgemäße Verbrennungsmotor eignet sich gleichermaßen für den Betrieb als stationärer oder mobiler Motor.

Weitere Vorteile und Einzelheiten der Erfindung ergeben sich aus der nachfolgenden Figurenbeschreibung. Dabei zeigen:
- Fig. 1: ein Schema eines Ausführungsbeispieles eines erfindungsgemäßen Verbrennungsmotors,
- Fig. 2: ein Ausführungsbeispiel eines Zylinders eines erfindungsgemäßen Verbrennungsmotors in einem schematischen Längsschnitt,
- Fig. 3: ein weiteres Ausführungsbeispiel eines Zylinders eines erfindungsgemäßen Verbrennungsmotors in einem schematischen Längsschnitt,
- Fig. 4a, b: ein weiteres Ausführungsbeispiel eines Zylinders eines erfindungsgemäßen Verbrennungsmotors in einem schematischen Längsschnitt und in einer Draufsicht auf den Zylinderkopf,
- Fig. 5: ein weiteres Ausführungsbeispiel eines Zylinders eines erfindungsgemäßen Verbrennungsmotors in einem schematischen Längsschnitt und
- Fig. 6: den zeitlichen Verlauf der Laserlichtintensität bei einer geregelten Dreifach-Zündung pro Arbeitstakt.

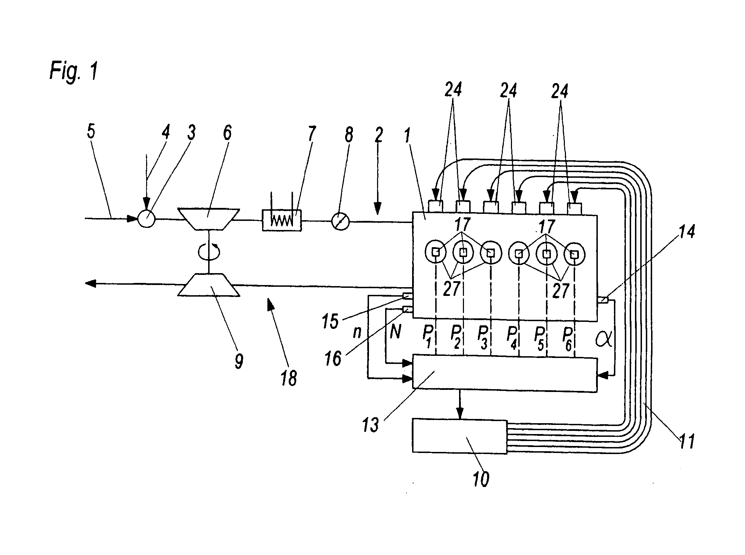

Fig. 1 zeigt einen erfindungsgemäßen Verbrennungsmotor mit sechs Zylindern 27 in einer stationären Ausführungsform. Das Kraftstoff-Luft-Gemisch wird dem Zylinderblock 1 über einen Einlasstrakt 2 zugeführt und über den Auspufftrakt 18 abgeführt. In einem Mischer 3, wird über die Leitung 4 zugeführter Kraftstoff mit über die Leitung 5 zugeführter Luft gemischt. Über den Turbolader-Verdichter 6 wird das Kraftstoff-Luft-Gemisch verdichtet und gelangt über das thermische Element 7, über welches die Temperatur des Kraftstoff-Luft-Gemisches verändert werden kann und die Drosselklappe 8 in den Raum vor den nicht näher dargestellten Einlassventilen des Zylinderblocks 1. In der Abgasleitung 18 ist das Turbinenrad 9 des Turboladers angeordnet. Die Gemischbildung könnte natürlich auch innerhalb des Zylinderkopfes im Ansaugtrakt oder im Zylinderraum direkt während des Ansaugtaktes erfolgen.

Zu erkennen sind weiters eine mit 10 bezeichnete Laserlichtquelle und eine aus flexiblen Lichtleitern 11 bestehende optische Übertragungseinrichtung, welche das Laserlicht zu den Einkopplungsoptiken 24 der einzelnen Zylinder führt.

Die Laserlichtquelle 10 wird von einer elektronischen Motorregelungsvorrichtung 13 geregelt die aus den schematisch dargestellten Messeinrichtungen für die Drehzahl 15, die Motorleistung 16 und den Zylinderdruck 17 die aktuellen Betriebswerte des Motors empfängt. Der aktuelle Kurbelwinkelwert wird dabei mit α, die Motorleistung mit N, die Drehzahl n und die aktuellen Zylinderdruckwerte mit P1 bis P6 bezeichnet. Das Kurbelwellenwinkelsignal α dient vor allem zur zeitlichen Festlegung der Laserzündimpulse zu den einzelnen Zylindern 27.

Es wäre natürlich auch möglich, für jeden einzelnen Zylinder 27 einen eigenen Laser in der Laserlichtquelle 10 vorzusehen.

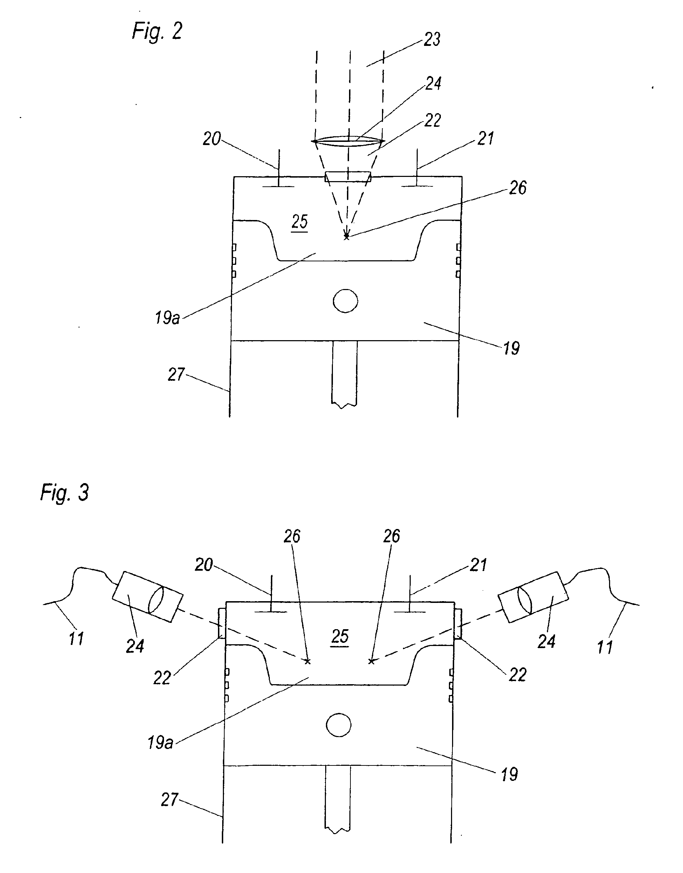

Fig. 2 zeigt ein Ausführungsbeispiel eines Zylinders 27 eines erfindungsgemäßen Verbrennungsmotors in einem schematischen Längsschnitt. Dargestellt sind der Kolben 19 in oberer Totpunktslage, welcher eine Kolbenmulde 19a aufweist. Nur schematisch dargestellt sind das Einlassventil 20 und das Auslassventil 21. In diesem Ausführungsbeispiel ist vorgesehen, das von der Laserlichtquelle 10 stammende Laserlicht 23 durch eine Linse 24 über ein Brennraumfenster 22 auf einem einzigen Brennpunkt 26 im Brennraum 25 zu fokussieren. Diese Darstellung ist natürlich, speziell auch in Bezug auf das geometrische Verdichtungsverhältnis ε, nicht maßstabsgerecht. Dies gilt auch für alle anderen Figuren.

Fig. 3 zeigt ein weiteres Ausführungsbeispiel eines Zylinders 27 eines erfindungsgemäßen Verbrennungsmotors, bei dem das Laserlicht 23 über zwei Einkopplungsoptiken 24 und zwei Brennraumfenstern 22 auf zwei Brennpunkte 26 im Brennraum 25 fokusiert wird. Das über die Lichtleiter 11 zugeführte Laserlicht 23, kann aus derselben Laserlichtquelle bzw. dem selben Laser stammen. Es ist aber auch möglich getrennte Laser zu verwenden. Ebenso könnte vorgesehen sein, diese beiden Laserlichtpulse zeitlich versetzt zur Zündung während ein und desselben Arbeitstaktes bzw. zur Einleitung desselben einzusetzen.

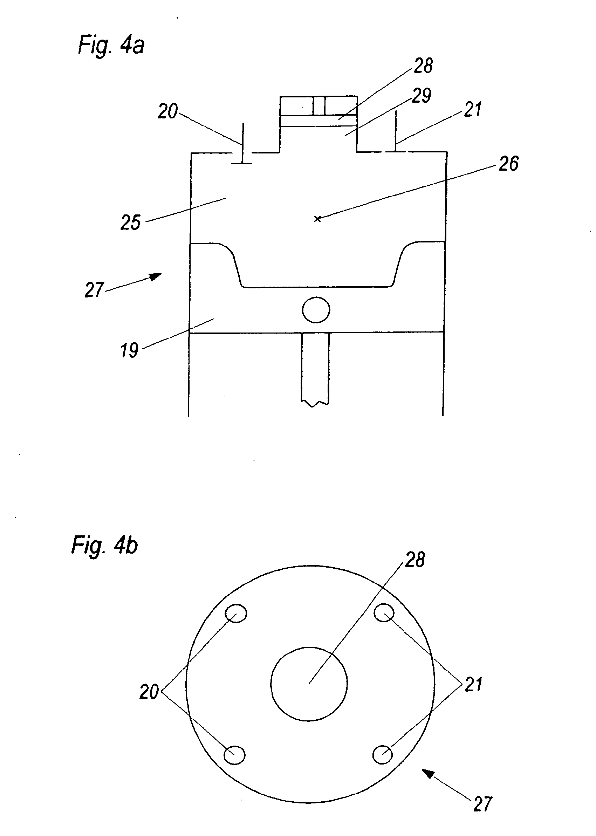

Fig.4a zeigt ein weiteres Ausführungsbeispiel eines Zylinders 27 eines erfindungsgemäßen Verbrennungsmotors, bei dem ein hydraulisch betätigter Ausweichkolben 28 zur Variation des geometrischen Verdichtungsverhältnisses ε vorgesehen ist. Durch Einstellen des Regelvolumens 29 über die Bewegung des Ausweichkolbens 28 kann das Volumen des mit dem Regelvolumen 29 in Verbindung stehenden Brennraums 25 verkleinert oder vergrößert werden. In diesem Beispiel erfolgt die Einbringung des Laserlichtes 23 durch ein nicht dargestelltes, in der Zylinderseitenwand angeordnetes Brennraumfenster 22. Fig. 4b zeigt eine Draufsicht auf den Zylinderkopf der Fig. 4a bei herausgenommenem Kolben 19. Zu erkennen sind der Ausweichkolben 28 sowie je zwei Einlass- und Auslassventile 20, 21.

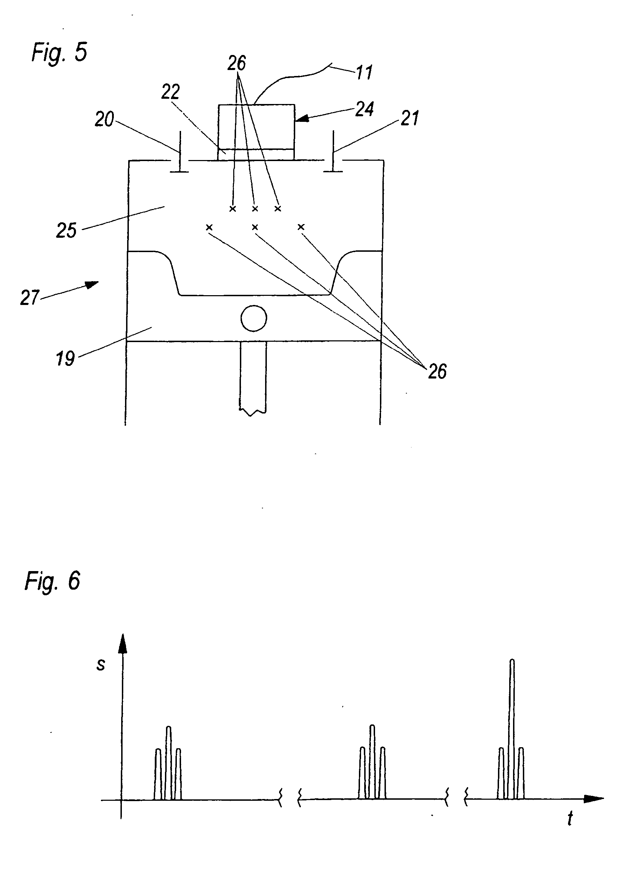

Fig. 5 zeigt ein weiteres Ausführungsbeispiel eines Zylinders 27 eines erfindungsgemäßen Verbrennungsmotors, bei dem sechs Brennpunkte 26 im Brennraum 25 vorgesehen sind. Die Erzeugung dieser Brennpunkte 26 kann dabei über ein nicht näher dargestelltes holographisches optisches Element (beispielsweise ein Beugungsgitter) in der Einkopplungsoptik 24 erfolgen.

Fig. 6 zeigt eine zeitliche Abfolge von Laserzündimpulsen zur Zündung bzw. Einleitung aufeinanderfolgender Arbeitstakte, wobei in diesem Ausführungsbeispiel pro Zündvorgang drei in der Intensität verschieden starke Laserlichtpulse in knapper zeitlicher Aufeinanderfolge vorgesehen sind. Dadurch kann auch bei sehr mageren Kraftstoff-LuftGemischen eine zuverlässige Zündung erzielt werden. Außerdem erlaubt eine solche Mehrfachzündung eine Echtzeitregelung der Laserlichtintensität über den Zylinderdruck. Es kann beispielsweise vorgesehen sein, dass die Intensität des zweiten Laserlichtimpulses erhöht wird, falls der erste Laserlichtpuls zu keiner Zündung geführt hat, was an einem zu flachen Anstieg des gemessenen Zylinderdruckes erkennbar ist. In Fig. 6 ist dies beispielsweise bei der dritten Zündimpulsgruppe (ganz rechts) gezeigt. Auf die Darstellung und Beschreibung von Bauteilen bzw. Handlungsweisen die einem Fachmann geläufig sind, wurde verzichtet.

## Patentansprüche

1. Verbrennungsmotor mit mindestens einem Zylinder, bei dem ein Kraftstoff-Luft-Gemisch im Zylinder durch einen Kolben verdichtbar ist, **dadurch gekennzeichnet, dass** die Temperatur des Kraftstoff-Luft-Gemisches im Brennraum (25) wenigstens auf über 80% und bis auf höchstens 98% der Selbstentzündungstemperatur des Kraftstoff-Luft-Gemisches bringbar ist und die Zündung der Verbrennung zeitlich gesteuert durch die Einbringung von Laserlicht (23) in den Brennraum (25) erfolgt.

2. Verbrennungsmotor nach Anspruch 1, **dadurch gekennzeichnet, dass** die Temperatur des Kraftstoff-Luft-Gemisches im Brennraum (25) wenigstens auf über 85%, vorzugsweise über 87%, der Selbstentzündungstemperatur des Kraftstoff-Luft-Gemisches bringbar ist.

3. Verbrennungsmotor nach Anspruch 1 oder 2, **dadurch gekennzeichnet, dass** die Temperatur des Kraftstoff-Luft-Gemisches im Brennraum (25) bis auf höchstens 95%, vorzugsweise höchstens 93%, der Selbstentzündungstemperatur des Kraftstoff-Luft-Gemisches bringbar ist.

4. Verbrennungsmotor nach einem der Ansprüche 1 bis 3, **dadurch gekennzeichnet, dass** die Gemischbildung außerhalb des Brennraumes (25) erfolgt.

5. Verbrennungsmotor nach einem der Ansprüche 1 bis 3, **dadurch gekennzeichnet, dass** die Gemischbildung im Brennraum (25), vorzugsweise während des Ansaugtaktes, erfolgt.

6. Verbrennungsmotor nach einem der Ansprüche 1 bis 5, **dadurch gekennzeichnet, dass** das Kraftstoff-Luft-Gemisch im Brennraum (25) - vorzugsweise wenigstens bereichsweise -homogen ist.

7. Verbrennungsmotor nach Anspruch 6, **dadurch gekennzeichnet, dass** das Luft-Kraftstoff-Verhältnis λ im gesamten Brennraum (25) annähernd konstant ist.

8. Verbrennungsmotor nach Anspruch 6, **dadurch gekennzeichnet, dass** das Luft-Kraftstoff-Verhältnis λ in einem Bereich um den Zündort herum kleiner ist als im restlichen Brennraum (25).

9. Verbrennungsmotor nach einem der Ansprüche 1 bis 8, **dadurch gekennzeichnet, dass** das Luft-Kraftstoff-Verhältnis λ größer als 1,5 - vorzugsweise größer als 1,8 - ist.

10. Verbrennungsmotor nach einem der Ansprüche 1 bis 9, **dadurch gekennzeichnet, dass** das geometrische Verdichtungsverhältnis ε größer als 14 - vorzugsweise größer als 16 - ist.

11. Verbrennungsmotor nach einem der Ansprüche 1 bis 10, **dadurch gekennzeichnet, dass** er wenigstens eine Laserlichtquelle (10), wenigstens eine optische Übertragungseinrichtung (11) und wenigstens eine Einkopplungsoptik (12) zum Fokussieren des Laserlichtes (23) in den Brennraum (25), auf wenigstens einen Fokus (26), aufweist.

12. Verbrennungsmotor nach einem der Ansprüche 1 bis 11, **dadurch gekennzeichnet, dass** jeder Zylinder (27) einen vorkammerlosen Hauptbrennraum (25) mit Ein- und Auslassventilen (20, 21) aufweist und mindestens ein Fokus (26) des Laserlichtes (23) im Hauptbrennraum (25) liegt.

13. Verbrennungsmotor nach einem der Ansprüche 1 bis 12, **dadurch gekennzeichnet, dass** er ein stationärer Motor ist.

14. Verbrennungsmotor nach einem der Ansprüche 1 bis 13, **dadurch gekennzeichnet, dass** die Laserlichtquelle (10) einen vorzugsweise diodenlasergepumpten Festkörperlaser aufweist, wobei der Festkörperlaser bevorzugt ein Yb-Laser und/oder Nd-Laser - vorzugsweise Nd-Laser mit G⁴⁺ sättigbarem Absorber - und/oder ein Nd/YAG-Laser ist.

15. Verbrennungsmotor nach einem der Ansprüche 1 bis 14, **dadurch gekennzeichnet, dass** die Laserlichtquelle (10) zumindest eine Laserdiode umfasst, deren Licht (23) über einen
- vorzugsweise flexiblen - Lichtleiter (11) und eine Einkopplungsoptik (24) in den Brennraum (25) gelangt.

16. Verbrennungsmotor nach einem der Ansprüche 1 bis 15, **dadurch gekennzeichnet, dass** die Laserlichtquelle (10) einen aktiv oder passiv gütegeschaltenen Laser umfasst.

17. Verbrennungsmotor nach einem der Ansprüche 1 bis 16, **dadurch gekennzeichnet, dass** die Wellenlänge des Laserlichtes (23) über 400 nm, vorzugsweise über 1000 nm, liegt.

18. Verbrennungsmotor nach einem der Ansprüche 1 bis 17, **dadurch gekennzeichnet, dass** die Pulsdauer eines Laserlichtpulses zwischen 1 ns, und 100 ns, vorzugsweise zwischen 5 ns und 50 ns liegt.

19. Verbrennungsmotor nach einem der Ansprüche 1 bis 18, **dadurch gekennzeichnet, dass** die optische Übertragungseinrichtung (11) flexible Lichtleiter umfasst.

20. Verbrennungsmotor nach einem der Ansprüche 1 bis 19, **dadurch gekennzeichnet, dass** für jeden Zylinder (27) zwei oder mehrere Laserlichtquellen (10) vorgesehen sind.

21. Verbrennungsmotor nach einem der Ansprüche 1 bis 20, **dadurch gekennzeichnet, dass** die Einkopplungsoptik (24) ein - vorzugsweise aus Saphir bestehendes - Brennraumfenster (22) und außerhalb des Brennraumes (25) eine Linse oder eine Linsenanordnung zum Fokussieren von Laserlicht (23) durch das Brennraumfenster (22) hindurch in den Brennraum (25) aufweist.

22. Verbrennungsmotor nach einem der Ansprüche 1 bis 21, **dadurch gekennzeichnet, dass** das Brennraumfenster (22) der Einkopplungsoptik (24) selbst als Linse ausgebildet ist.

23. Verbrennungsmotor nach einem der Ansprüche 1 bis 22, **dadurch gekennzeichnet, dass** eine elektronische Motorsteuerung bzw. -regelung (13) vorgesehen ist, die in Abhängigkeit von erfassten Motorparametern - vorzugsweise dem Kurbelwellenwinkel (α) und/oder der Drehzahl (n) und/oder der Motorleistung (N) und/oder dem aktuellen Zylinderdruck (P_{z}) im Brennraum (25) - die Laserlichtquelle(n) (10) ansteuert und dabei Laserlichtparameter wie die zeitliche Abfolge und/oder die Pulsdauer und/oder die Zündenergie festlegt.

24. Verbrennungsmotor nach einem der Ansprüche 1 bis 23, **dadurch gekennzeichnet, dass** eine elektronische Motorsteuerung bzw. -regelung (13) vorgesehen ist, die die Zündenergie eines zweiten und/oder allfälliger weiterer Laserlichtpulse während desselben Arbeitstaktes eines Zylinders (27) in Abhängigkeit vom aktuellen Zylinderdruck (P_{z}) nach dem ersten Laserlichtpuls steuert bzw. regelt.

25. Verbrennungsmotor nach einem der Ansprüche 1 bis 24, **dadurch gekennzeichnet, dass** das Kraftstoff-Luft-Gemisch pro Arbeitstakt eines Zylinders (27) durch mindestens zwei zeitlich aufeinander folgende Laserlichtpulse gezündet wird.

26. Verbrennungsmotor nach einem der Ansprüche 1 bis 25, **dadurch gekennzeichnet, dass** eine elektronische Motorsteuerung bzw. -regelung (13) vorgesehen ist, die das Luft-Kraftstoff-Verhältnis λ bei Beginn eines Arbeitstaktes in Abhängigkeit von erfassten Motorparametern - vorzugsweise vom Zylinderdruck (Pi) - vorhergehender Arbeitstakte - vorzugsweise nur des unmittelbar vorhergehenden Arbeitstaktes - festlegt.

27. Verbrennungsmotor nach einem der Ansprüche 1 bis 26, **dadurch gekennzeichnet, dass** das geometrische Verdichtungsverhältnis ε - vorzugsweise durch einen Ausweichkolben (28), vorzugsweise mit hydraulischer Regelung - variierbar ist.

28. Verbrennungsmotor nach einem der Ansprüche 1 bis 27, **dadurch gekennzeichnet, dass** das geometrische Verdichtungsverhältnis ε durch das Verschwenken der Kurbelwelle variierbar ist.

29. Verbrennungsmotor nach einem der Ansprüche 1 bis 28, **dadurch gekennzeichnet, dass** das geometrische Verdichtungsverhältnis ε durch eine - vorzugsweise druckabhängige - Veränderung des Abstandes von der Mitte des Kolbenbolzens zur Oberkante des Kolbens (19) variierbar ist.

30. Verbrennungsmotor nach einem der Ansprüche 1 bis 29, **dadurch gekennzeichnet, dass** nach einer vorgegebenen Anzahl von Arbeitstakten und/oder beim Startvorgang des Verbrennungsmotors ein Laserlichtpuls in den nicht mit Kraftstoff-Luft-Gemisch gefüllten Brennraum (25) abgegeben wird.

## Claims

1. Internal combustion engine with at least one cylinder, in which a fuel/air mixture can be compressed in the cylinder by a piston, **characterized in that** the temperature of the fuel/air mixture in the combustion chamber (25) can be brought to at least over 80% and up to at most 98% of the spontaneous ignition temperature of the fuel/air mixture and the ignition of the combustion is time-controlled through the introduction of laser light (23) into the combustion chamber (25).

2. Internal combustion engine according to claim 1, **characterized in that** the temperature of the fuel/air mixture in the combustion chamber (25) can be brought to at least over 85%, preferably over 87%, of the spontaneous ignition temperature of the fuel/ignition mixture.

3. internal combustion engine according to claim 1 or 2, **characterized in that** the temperature of the fuel/air mixture in the combustion chamber (25) can be brought to at most 95%, preferably at most 93%, of the spontaneous ignition temperature of the fuel/air mixture.

4. Internal combustion engine according to one of claims 1 to 3, **characterized in that** the mixture is formed outside the combustion chamber (25).

5. Internal combustion engine according to one of claims 1 to 3, **characterized in that** the mixture is formed in the combustion chamber (25), preferably during the induction stroke.

6. Internal combustion engine according to one of claims 1 to 5, **characterized in that** the fuel/air mixture in the combustion chamber (25) is - preferably at least in parts - homogeneous.

7. Internal combustion engine according to claim 6, **characterized in that** the air/fuel ratio λ in the whole combustion chamber (25) is approximately constant.

8. Internal combustion engine according to claim 6, **characterized in that** the air/fuel ratio λ is smaller in an area around the source of ignition than in the remainder of the combustion chamber (25).

9. Internal combustion engine according to one of claims 1 to 8, **characterized in that** the air/fuel ratio λ is greater than 1.5 - preferably greater than 1.8.

10. Internal combustion engine according to one of claims 1 to 9, **characterized in that** the geometric compression ratio ε is greater than 14 - preferably greater than 16.

11. Internal combustion engine according to one of claims 1 to 10, **characterized in that** it has at least one laser light source (10), at least one optical transmission apparatus (11) and at least one coupling optic (12) for the focussing of the laser light (23) into the combustion chamber (25), onto at least one focus (26).

12. Internal combustion engine according to one of claims 1 to 11, **characterized in that** each cylinder (27) has an antechamber-less main combustion chamber (25) with in- and outlet valves (20, 21) and at least one focus (26) of the laser light (23) lies in the main combustion chamber (25).

13. Internal combustion engine according to one of claims 1 to 12, **characterized in that** it is a stationary engine.

14. Internal combustion engine according to one of claims 1 to 13, **characterized in that** the laser light source (10) has a preferably diode laser pumped solid-state laser, wherein the solid-state laser is preferably a Yb laser and/or a Nd laser - preferably Nd laser with G⁴⁺ saturable absorber- and/or a Nd/YAG laser.

15. Internal combustion engine according to one of claims 1 to 14, **characterized in that** the laser light source (10) comprises at least one laser diode the light (23) of which enters the combustion chamber (25) via a - preferably flexible - optical conductor (11) and a coupling optic (24).

16. Internal combustion engine according to one of claims 1 to 15, **characterized in that** the laser light source (10) comprises an actively or a passively Q switched laser.

17. Internal combustion engine according to one of claims 1 to 16, **characterized in that** the wavelength of the laser light lies above 400 nm, preferably above 1000 nm.

18. Internal combustion engine according to one of claims 1 to 17, **characterized in that** the pulse duration of a laser light pulse lies between 1 ns and 100 ns, preferably between 5 ns and 50 ns.

19. Internal combustion engine according to one of claims 1 to 18, **characterized in that** the optical transmission apparatus (11) comprises flexible optical conductors.

20. Internal combustion engine according to one of claims 1 to 19, **characterized in that** at least two laser light sources (10) are provided for every cylinder (27).

21. Internal combustion engine according to one of claims 1 to 20, **characterized in that** the coupling optic (24) has a combustion chamber window (22), preferably made of sapphire, and outside the combustion chamber (25) a lens or a lens arrangement for the focussing of laser light (23) through the combustion chamber window (22) into the combustion chamber (25).

22. Internal combustion engine according to one of claims 1 to 21, **characterized in that** the combustion chamber window (22) of the coupling optic (24) is itself developed as a lens.

23. Internal combustion engine according to one of claims 1 to 22, **characterized in that** an electronic engine-control or an engine-regulating device (13) is provided which, according to recorded engine parameters - preferably the crankshaft angle (α) and/or the engine speed (n) and/or the engine power (N) and the current cylinder pressure (P_{z}) in the combustion chamber (25) - triggers the laser light source(s) (10) and in so doing establishes laser light parameters, such as the chronological sequence and/or the pulse duration and/or the ignition energy.

24. Internal combustion engine according to one of claims 1 to 23, **characterized in that** an electronic engine-control or an engine-regulating device (13) is provided which controls or adjusts the ignition energy of a second laser and/or possibly other light pulse(s) during the same working cycle of a cylinder (27), according to current cylinder pressure (P_{z}) after the first laser light pulse.

25. Internal combustion engine according to one of claims 1 to 24, **characterized in that** the fuel/air mixture is ignited by at least two chronologically successive laser light pulses per working cycle of a cylinder (27).

26. Internal combustion engine according to one of claims 1 to 25, **characterized in that** an electronic engine-control or an engine-regulating device (13) is provided which at the start of a working cycle establishes the air/fuel ratio λ, according to recorded engine parameters - preferably the cylinder pressures (P₁) - of previous - preferably the directly preceding -working cycle.

27. Internal combustion engine according to one of claims 1 to 26, **characterized in that** the geometric compression ratio ε can be varied - preferably by an alternating piston (28), preferably with a hydraulic control.

28. Internal combustion engine according to one of claims 1 to 27, **characterized in that** the geometric compression ratio ε can be varied by swivelling the crankshaft.

29. Internal combustion engine according to one of claims 1 to 28, **characterized in that** the geometric compression ratio ε can be varied by a - preferably pressure-dependent - changing of the distance between the middle of the piston pin and the upper edge of the piston (19).

30. Internal combustion engine according to one of claims 1 to 29, **characterized in that**, after a pre-determined number of working cycles and/or during the starting process of the internal combustion engine a laser light pulse is emitted into the combustion chamber (25) which is not filled with fuel/air mixture.

## Revendications

1. Moteur à combustion interne comportant au moins un cylindre, dans lequel un mélange carburant-air dans le cylindre peut être comprimé à l'aide d'un piston, **caractérisé en ce que** la température du mélange carburant-air dans la chambre de combustion (25) peut être amenée au moins à plus de 80 % et tout au plus à 98 % de la température d'auto-inflammation du mélange carburant-air, et **en ce que** l'allumage de la combustion est effectué de manière commandée dans le temps par l'introduction d'un faisceau laser (23) dans la chambre de combustion (25).

2. Moteur à combustion interne selon la revendication 1, **caractérisé en ce que** la température du mélange carburant-air dans la chambre de combustion (25) peut être amenée au moins à plus de 85 %, de préférence à plus de 87 %, de la température d'auto-inflammation du mélange carburant-air.

3. Moteur à combustion interne selon la revendication 1 ou 2, **caractérisé en ce que** la température du mélange carburant-air dans la chambre de combustion (25) peut être amenée tout au plus à 95 %, de préférence tout au plus à 93 %, de la température d'auto-inflammation du mélange carburant-air.

4. Moteur à combustion interne selon l'une quelconque des revendications 1 à 3, **caractérisé en ce que** la réalisation du mélange s'effectue à l'extérieur de la chambre de combustion (25).

5. Moteur à combustion interne selon l'une quelconque des revendications 1 à 3, **caractérisé en ce que** la réalisation du mélange dans la chambre de combustion (25) s'effectue de préférence pendant la course d'admission.

6. Moteur à combustion interne selon l'une quelconque des revendications 1 à 5, **caractérisé en ce que** le mélange carburant-air dans la chambre de combustion (25) est homogène, de préférence au moins de manière partielle.

7. Moteur à combustion interne selon la revendication 6, **caractérisé en ce que** le rapport air-carburant λ dans l'ensemble de la chambre de combustion (25) est à peu près constant.

8. Moteur à combustion interne selon la revendication 6, **caractérisé en ce que** le rapport air-carburant λ dans une zone autour de la source d'allumage est inférieur à celui dans le reste de la chambre de combustion (25).

9. Moteur à combustion interne selon l'une quelconque des revendications 1 à 8, **caractérisé en ce que** le rapport air-carburant λ est supérieur à 1,5, de préférence supérieur à 1,8.

10. Moteur à combustion interne selon l'une quelconque des revendications 1 à 9, **caractérisé en ce que** le taux de compression géométrique ε est supérieur à 14, de préférence supérieur à 16.

11. Moteur à combustion interne selon l'une quelconque des revendications 1 à 10, **caractérisé en ce qu'**il présente au moins une source de faisceau laser (10), au moins un dispositif de transmission optique (11) et au moins une optique de couplage (12) afin de focaliser le faisceau laser (23) dans la chambre de combustion (25), sur au moins un foyer (26).

12. Moteur à combustion interne selon l'une quelconque des revendications 1 à 11, **caractérisé en ce que** chaque cylindre (27) présente une chambre de combustion principale (25) sans préchambre avec des soupapes d'admission et d'échappement (20, 21), et **en ce qu'**au moins un foyer (26) du faisceau laser (23) se trouve dans la chambre de combustion (25) principale.

13. Moteur à combustion interne selon l'une quelconque des revendications 1 à 12, **caractérisé en ce qu'**il s'agit d'un moteur stationnaire.

14. Moteur à combustion interne selon l'une quelconque des revendications 1 à 13, **caractérisé en ce que** la source de faisceau laser (10) présente un laser solide de préférence pompé par laser à diodes, le laser solide étant de préférence un laser Yb et/ou un laser Nd, de préférence un laser Nd avec un absorbeur saturable G⁴⁺ et/ou un laser Nd/YAG.

15. Moteur à combustion interne selon l'une quelconque des revendications 1 à 14, **caractérisé en ce que** la source de faisceau laser (10) comprend au moins une diode laser, dont le faisceau (23) arrive dans la chambre de combustion (25) par le biais d'un conducteur de lumière (11) de préférence flexible et d'une optique de couplage (24).

16. Moteur à combustion interne selon l'une quelconque des revendications 1 à 15, **caractérisé en ce que** la source de faisceau laser (10) comprend un laser déclenché de manière active ou passive.

17. Moteur à combustion interne selon l'une quelconque des revendications 1 à 16, **caractérisé en ce que** la longueur d'onde du faisceau laser (23) est supérieure à 400 nm, de préférence supérieure à 1000 nm.

18. Moteur à combustion interne selon l'une quelconque des revendications 1 à 17, **caractérisé en ce que** la durée d'impulsion d'une impulsion de faisceau laser se situe entre 1 ns et 100 ns, de préférence entre 5 ns et 50 ns.

19. Moteur à combustion interne selon l'une quelconque des revendications 1 à 18, **caractérisé en ce que** le dispositif de transmission optique (11) comprend des conducteurs de lumière flexibles.

20. Moteur à combustion interne selon l'une quelconque des revendications 1 à 19, **caractérisé en ce que** deux sources de faisceau laser (10) ou plus sont prévues pour chaque cylindre (27).

21. Moteur à combustion interne selon l'une quelconque des revendications 1 à 20, **caractérisé en ce que** l'optique de couplage (24) présente une fenêtre de chambre de combustion (22) se composant de préférence de saphir et, à l'extérieur de la chambre de combustion (25), une lentille ou un agencement de lentilles servant à focaliser le faisceau laser (23) dans la chambre de combustion (25) au travers de la fenêtre de chambre de combustion (22).

22. Moteur à combustion interne selon l'une quelconque des revendications 1 à 21, **caractérisé en ce que** la fenêtre de chambre de combustion (22) de l'optique de couplage (24) est elle-même réalisée sous la forme d'une lentille.

23. Moteur à combustion interne selon l'une quelconque des revendications 1 à 22, **caractérisé en ce qu'**est prévu un dispositif à moteur électronique de commande et/ou de régulation (13) qui, en fonction de paramètres moteur saisis, de préférence de l'angle de vilebrequin (α) et/ou du régime (n) et/ou de la puissance du moteur (N) et/ou de la pression cylindrique actuelle (P.) dans la chambre de pression (25), commande la/les source(s) de faisceau laser (10) et définit dans ce cadre les paramètres de faisceau laser tels que la suite chronologique et/ou la durée d'impulsion et/ou l'énergie d'allumage.

24. Moteur à combustion interne selon l'une quelconque des revendications 1 à 23, **caractérisé en ce qu'**est prévu un dispositif à moteur électronique de commande et/ou de régulation (13), qui commande et/ou régule l'énergie d'allumage d'une seconde et/ou d'une éventuelle impulsion de faisceau laser supplémentaire durant la même cadence d'un cylindre (27) en fonction de la pression cylindrique actuelle (P₂) après la première impulsion de faisceau laser.

25. Moteur à combustion interne selon l'une quelconque des revendications 1 à 24, **caractérisé en ce que** le mélange carburant-air par cadence d'un cylindre (27) est enflammé par au moins deux impulsions de faisceau laser se suivant chronologiquement.

26. Moteur à combustion interne selon l'une quelconque des revendications 1 à 25, **caractérisé en ce qu'**est prévu un dispositif à moteur électronique de commande et/ou de régulation (13), qui définit le rapport air-carburant A au début d'une cadence en fonction de paramètres de moteur saisis, de préférence de la pression cylindrique (Pi), de cadences antérieures, de préférence uniquement de la cadence immédiatement antérieure.

27. Moteur à combustion interne selon l'une quelconque des revendications 1 à 26, **caractérisé en ce que** le taux de compression géométrique ε peut varier, de préférence à l'aide d'un piston de dérivation (28), de préférence avec une régulation hydraulique.

28. Moteur à combustion interne selon l'une quelconque des revendications 1 à 27, **caractérisé en ce que** le taux de compression géométrique E peut varier par le pivotement du vilebrequin.

29. Moteur à combustion interne selon l'une quelconque des revendications 1 à 28, **caractérisé en ce que** le taux de compression géométrique ε peut varier au moyen d'une modification de la distance, qui dépend de préférence de la pression, depuis le milieu de l'axe de piston jusqu'au bord supérieur du piston (19).

30. Moteur à combustion interne selon l'une quelconque des revendications 1 à 29, **caractérisé en ce que**, après un nombre prédéfini de cadences et/ou lors du processus de démarrage du moteur à combustion interne, une impulsion de faisceau laser est émise dans la chambre de combustion (25) non remplie du mélange carburant-air.
